# EUROPEAN PATENT APPLICATION

(11) **EP 4 472 242 A1**
(43) Date of publication of application: **04.12.2024**
(21) Application number: 23177039.7
(22) Date of filing: 02.06.2023
(51) Int. Cl.: H04S 7/00

(54) **SPATIAL AUDIO**

(71) Applicant: Nokia Technologies Oy, 02610 Espoo (FI)
(72) Inventor: LEPPÄNEN, Jussi Artturi, Tampere (FI); MATE, Sujeet Shyamsundar, Tampere (FI); LEHTINIEMI, Arto Juhani, Lempäälä (FI)
(74) Representative: Nokia EPO representatives

(57) **Abstract**

An apparatus (10, 12) comprising:
means (14) for receiving a data structure (100) for controlling rendering of a sound scene (76) to a user (51) of the apparatus, wherein the data structure (100) specifies one or more positions (77) for initial rendering a new sound object (80, 82) associated with a different user;
means (16) for selecting one of the one or more positions (77) specified by the data structure (100), wherein the means for selecting one of the one or more positions specified by the data structure is configured to select a specified position (77) in dependence upon at least a position of the user (51); and
means (16) for rendering the new sound object (80,82) at the selected position (77).

## Description

### TECHNOLOGICAL FIELD

Examples of the disclosure relate to spatial audio.

### BACKGROUND

Spatial audio involves rendering, to a user, a sound source at a three-dimensional position in a three-dimensional sound space.

In some examples, user actions change a virtual position of a virtual listener within the three-dimensional sound space. Such user actions can therefore change a spatial relationship of a virtual listener to a rendered sound source.

It is desirable to provide tools that enable some limited control over how spatial audio is rendered by a person other than the user.

### BRIEF SUMMARY

According to various, but not necessarily all, examples there is provided an apparatus comprising:
means for receiving a data structure for controlling rendering of a sound scene to a user of the apparatus, wherein the data structure specifies one or more positions for initial rendering of a new sound object associated with a different user;
means for selecting one of the one or more positions specified by the data structure, wherein the means for selecting one of the one or more positions specified by the data structure is configured to select a specified position in dependence upon at least a position of the user; and
means for rendering the new sound object at the selected position.

In some but not necessarily all examples, the means for rendering enables the user and the different user to share a virtual three-dimensional space, wherein the sound scene is a three-dimensional sound scene that has a fixed relationship to the virtual three-dimensional space.

In some but not necessarily all examples, the means for rendering enables the user to change position and/or orientation of the user within the virtual three-dimensional space.

In some but not necessarily all examples, the means for rendering enables, after the initial rendering of the sound object associated with the different user at the selected position, the different user to change a position and/or orientation at which the sound object associated with the different user is rendered within the virtual three-dimensional space.

In some but not necessarily all examples, the apparatus comprises means for displaying a visual object at the selected position at which the new sound object is rendered.

In some but not necessarily all examples, the sound object is a live social audio object associated with the different user and comprises at least live speech of the different user.

In some but not necessarily all examples, the means for selecting one of the one or more positions specified by the data structure is further configured to select a specified position in dependence upon one or more of:
an orientation of the user;
a state of the sound scene;
estimated audibility to the user of the new sound object at the one or more specified positions;
estimated visibility to the user of the one or more specified positions;
a direct line of hearing between a position of the user and the one or more specified positions;
a direct line of visibility between a position of the user and the one or more specified positions;
whether the position of the user and any of the one or more specified positions share a defined acoustic space in a three-dimensional sound scene;
whether the position of the user and any of the one or more specified positions share a defined physical space in a virtual three-dimensional space;
whether one of the one or more specified positions is specified as a default position; a distance or weighted distance between a position of the user and the one or more specified positions;
sound attenuation attributes of a virtual three-dimensional space between a position of the user and the one or more specified positions.

In some but not necessarily all examples, the means for selecting one of the one or more positions specified by the data structure is configured to select a specified position in dependence upon at least one parameter specified in the data structure.

In some but not necessarily all examples, the means for selecting one of the one or more positions specified by the data structure is configured to select a sub-set of positions from the one or more positions specified by the data structure in dependence upon the at least one parameter specified in the data structure and configured to select the selected position from the sub-set of positions in dependence upon a distance or weighted distance between a position of the user and the one or more specified positions in the sub-set.

In some but not necessarily all examples, the means for rendering the new sound object at the selected position is an MPEG-I audio renderer that creates a sound scene state based on which sound is to be rendered to the user at a current position and/or orientation of the user in a virtual three-dimensional space.

In some but not necessarily all examples, the data structure is a data structure for controlling spatial rendering of a sound object to a user and the data structure comprises:
a first element configured to specify a sound object;
a second element configured to specify multiple alternative positions for initial rendering the sound object and at least one parameter for controlling selection of a position for initial rendering the sound object from the specified multiple alternative positions for initial rendering the sound object.

In some but not necessarily all examples, the first element is a sub-element of the second element or the second element is a sub-element of the first element.

In some but not necessarily all examples, the apparatus is configured as a head-mounted
apparatus.

According to various, but not necessarily all, examples there is provided a method comprising:
receiving a data structure for controlling rendering of a sound scene to a user of the apparatus, wherein the data structure specifies one or more positions for initial rendering a new sound object associated with a different user;
selecting one of the one or more positions specified by the data structure, wherein the means for selecting one of the one or more positions specified by the data structure is configured to select a specified position in dependence upon at least a position of the user; and
rendering the new sound object at the selected position.

According to various, but not necessarily all, examples there is provided a computer program that when executed by one or more processors of an apparatus causes the apparatus to:
use a data structure to control rendering of a sound scene to a user of the apparatus, wherein the data structure specifies one or more positions for initial rendering a new sound object associated with a different user;
select one of the one or more positions specified by the data structure in dependence upon at least a position of the user; and
render the new sound object at the selected position.

According to various, but not necessarily all, examples there is provided a data structure for controlling spatial rendering of a sound object to a user comprising:
a first element configured to specify a sound object;
a second element configured to specify multiple alternative positions for initial rendering the sound object and at least one parameter for controlling selection of a position for initial rendering the sound object from the specified multiple alternative positions for initial rendering the sound object.

In some but not necessarily all examples, the first element is a sub-element of the second element or the second element is a sub-element of the first element.

In some but not necessarily all examples, the sound object is a live social audio object associated with a different user.

According to various, but not necessarily all, examples there is provided an apparatus comprising:
means for receiving a data structure for controlling rendering of a sound scene to a user of the apparatus, wherein the data structure specifies a plurality of positions for initial rendering of a new sound object associated with a different user;
means for selecting one of the plurality of positions specified by the data structure in dependence upon at least a position of the user; and
means for rendering the new sound object at the selected position.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIGs 1A, 2A, 3A illustrate a real space, a sound space and a visual space at a first time and FIGs 1B, 2B, 3B illustrate the real space, the sound space and the visual space at a second later time;
FIG. 4A shows an example of a content-creation apparatus;
FIG. 4B shows an example of a content-rendering apparatus;
FIG. 5A and 5B show examples of a sound space comprising virtual positions for initial rendering a new sound object;
FIG 6A illustrates an example of the data structure 100 comprising spatial metadata and specifying audio content 202;
FIG 6B illustrates an example of the data structure 100 configured as a hierarchical arrangement of different elements;
FIG. 7 shows an example of a method;
FIG. 8A shows an example of a controller;
FIG. 8B shows an example of a computer program;
FIG. 9 shows an example of a system comprising a content-creation apparatus and a content-rendering apparatus
FIG. 10 shows an example of a method.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DEFINITIONS

*"artificial environment"* may be something that has been recorded or generated.
*"virtual visual space"* refers to fully or partially *artificial environment that* may be viewed, which may be three dimensional.
*"virtual visual scene"* refers to a representation of the *virtual visual space* viewed from a particular *point of view* within the *virtual visual space.*
*'virtual visual object* is a visible virtual object within a *virtual visual scene.*
*"sound space"* (or "virtual sound space") refers to an arrangement of sound sources in a three-dimensional space. A *sound space* may be defined in relation to recording sounds (a recorded sound space) and in relation to rendering sounds (a rendered sound space).
*"sound scene"* (or "virtual sound scene") refers to a representation of the *sound space* listened to from a particular *point of view* within the *sound space.* A three-dimensional sound scene refers to a three-dimensional representation of the *sound space* listened to from a particular *point of view* within the *sound space.*
*"sound object"* refers to sound source that may be located within the *sound space.* A source sound object represents a sound source within the sound space, in contrast to a sound source associated with an object in the virtual visual space. A recorded sound object represents sounds recorded at a particular microphone or location. A rendered sound object represents sounds rendered from a particular location.
*"virtual space"* may mean a *virtual visual space,* mean a *sound space* or mean a combination of a *virtual visual space* and corresponding *sound space.* In some examples, the *virtual space* may be three-dimensional. In some examples, the virtual three-dimensional space may extend horizontally up to 360° and may extend vertically up to 180°.
*"virtual scene"* may mean a *virtual visual scene,* mean a *sound scene* or mean a combination of a *virtual visual scene* and corresponding *sound scene.*
*'virtual object'* is an object within a *virtual scene,* it may be an artificial virtual object (e.g. a computer-generated virtual object) or it may be an image of a real object in a *real space* that is live or recorded. It may be a *sound object* and/or a *virtual visual object.*
*"Virtual position"* is a position within a virtual space. It may be defined using a *virtual location* and/or a *virtual orientation.* It may be considered to be a movable *'point of view'.*
*"Correspondence"* or *"corresponding"* when used in relation to a *sound space* and a *virtual visual space* means that the *sound space* and *virtual visual space* are time and space aligned, that is they are the same space at the same time.
*"Correspondence"* or *"corresponding"* when used in relation to a *sound scene* and a *virtual visual scene* (or visual scene) means that the *sound space* and *virtual visual space* (or visual scene) are corresponding and a *notional (virtual) listener whose point of view* defines the *sound scene* and a *notional (virtual) viewer* whose *point of view* defines the *virtual visual scene* (or visual scene) are at the same location and orientation, that is they have the same *point of view* (e.g. same virtual position).
*"real space"* (or "physical space") refers to a real environment, which may be three dimensional.
*"real scene"* refers to a representation of the *real space* from a particular *point of view* within the real space.
*"real visual scene"* refers to a visual representation of the real space viewed from a particular real *point of view* within the real space.
"real *position"* is a position within a real space. It may be defined using a *location* and/or an *orientation.* It may be considered to be a movable *'point of view'.*
*"mediated reality"* in this document refers to a user experiencing, for example visually, a fully or partially artificial environment (a *virtual space)* as a *virtual scene* at least partially rendered by an apparatus to a *user.* The *virtual scene* is determined by a *point of view* (virtual position) within the *virtual space. Displaying* the *virtual scene* means providing a virtual visual scene in a form that can be perceived by the *user.*
*"augmented reality"* in this document refers to a form of *mediated reality* in which a *user* experiences a partially artificial environment (a *virtual space)* as a *virtual scene* comprising a *real scene,* for example a *real visual scene,* of a physical real environment (*real space*) supplemented by one or more visual or audio *elements* rendered by an apparatus to a user. The term augmented reality implies a mixed reality or hybrid reality and does not necessarily imply the degree of virtuality (vs reality) or the degree of mediality;
*"virtual reality"* in this document refers to a form of *mediated reality* in which a user experiences a fully artificial environment (a *virtual visual space*) as a *virtual scene* displayed by an *apparatus* to a *user*;
*"virtual content"* is content, additional to *real content* from a real scene, if any, that enables *mediated reality by,* for example, providing one or more artificial *virtual objects. "mediated reality content"* is virtual content which enables *a user* to experience, for example visually, a fully or partially artificial environment (a *virtual space)* as a *virtual scene. Mediated reality content* could include interactive content such as a video game or non-interactive content such as motion video.
*"augmented reality content'* is a form of mediated reality content which enables a *user* to experience, for example visually, a partially artificial environment (a *virtual space)* as a *virtual scene. Augmented reality content* could include interactive content such as a video game or non-interactive content such as motion video.
*"virtual reality content'* is a form of mediated reality content which enables a user to experience, for example visually, a fully artificial environment (a *virtual space)* as a *virtual scene. Virtual reality content* could include interactive content such as a video game or non-interactive content such as motion video.
*"perspective-mediated"* as applied to *mediated reality, augmented reality or virtual reality* means that *user* actions determine the *point of view* (virtual position) within the virtual space, changing the *virtual scene;*
*"first person perspective-mediated"* as applied to *mediated reality, augmented reality or virtual reality* means *perspective mediated* with the additional constraint that the *user's* real *point of view* (location and/or orientation) determines the *point of view* (virtual position) within the *virtual space of a virtual user*;
*"third person perspective-mediated"* as applied to *mediated reality, augmented reality or virtual reality* means *perspective mediated* with the additional constraint that the *user's* real *point of view* does not determine the *point of view* (virtual position) within the *virtual space*;
*"user interactive"* as applied to *mediated reality, augmented reality or virtual reality means* that *user* actions at least partially determine what happens within the *virtual space*;
*"displaying"* means providing in a form that is perceived visually (viewed) by the *user. "rendering"* means providing in a form that is perceived by the *user*
*"virtual user"* defines the *point of view* (virtual position- location and/or orientation) in *virtual space* used to generate a *perspective-mediated sound scene and*/*or visual scene.* A virtual user may be a notional listener and/or a notional viewer.
*"notional listener"* defines the *point of view* (virtual position- location and/or orientation) in *virtual space* used to generate a *perspective-mediated sound scene*, irrespective of whether or not a *user* is actually listening
*"notional viewer"* defines the *point of view* (virtual position- location and/or orientation) in *virtual space* used to generate a *perspective-mediated visual scene*, irrespective of whether or not a *user* is actually viewing.

*Three degrees of freedom (3DoF)* describes *mediated reality where* the *virtual position* is determined by orientation only (e.g. the three degrees of three-dimensional orientation). In relation to *first person perspective-mediated reality,* only the *user's* orientation determines the *virtual position.*

*Six degrees of freedom (6DoF)* describes mediated reality where the *virtual position* is determined by both orientation (e.g. the three degrees of three-dimensional orientation) and location (e.g. the three degrees of three-dimensional location). In relation to *first person perspective-mediated reality*, both the *user's* orientation and the *user's* location in the *real space* determine the *virtual position.*

*Three degrees of freedom 'plus' (3DoF+)* describes an example of six degrees of freedom where a change in location (e.g. the three degrees of three-dimensional location) is a change in location relative to the user that can arise from a postural change of a user's head and/or body and does not involve a translation of the user through real space by, for example, walking.

### DETAILED DESCRIPTION

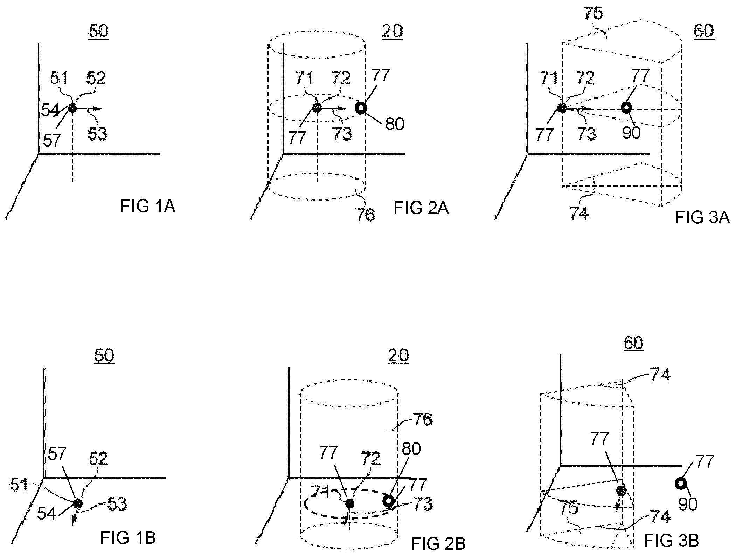

Figs. 1A, 2A, 3A and 1B, 2B, 3B illustrate rendering of mediated reality using virtual content. In this context, mediated reality means the rendering of mediated reality for the purposes of achieving mediated reality for example augmented reality or virtual reality. In these examples, the mediated reality is first person perspective-mediated reality. It may or may not be user interactive. It may be 3DoF, 3DoF+ or 6DoF.

Figs. 1A, 2A, 3A illustrate at a first time a real space 50 (FIG 1A), a sound space 20 (FIG 2A) and a virtual visual space 60 (FIG 3A). Figs. 1B, 2B, 3B illustrate at a second time the real space 50 (FIG 1B), the sound space 20 (FIG 2B) and the virtual visual space 60 (FIG 3B).

There is correspondence between the sound space 20 and the virtual visual space 60. Together they form a virtual space.

A position 57 in the real space 50 is defined by a location 52 and an orientation 53. The location is a three-dimensional location and the orientation is a three-dimensional orientation.

A position 77 (a virtual position) in the virtual space 20, 60 is defined by a location 72 (a virtual location) and an orientation 73 (a virtual orientation). The virtual location 72 is a three-dimensional location and the virtual orientation 73 is a three-dimensional orientation.

A user 51 in the real space 50 has a position 57 defined by a location 52 and an orientation 53. The location is a three-dimensional location and the orientation is a three-dimensional orientation.

In mediated reality, a position 57 of the user 51 (FIG 1A; 1B) controls a virtual orientation 73 of a virtual user 71 (FIGs 2A, 3A; 2B, 3B). A position 57 of the user 51 at the first time (FIG 1A) determines a virtual position 77 of a virtual user 71 (FIGs 2A, 3A). A position 57 of the user 51 at the second time (FIG 1B) determines a virtual position 77 of the virtual user 71 (FIGs 2B, 3B). The position 57 of the user 51 can be defined using an orientation 53 and/or location 54 of the user 51 and the corresponding virtual position 77 of the virtual user 71 can be defined using a virtual orientation 73 and/or virtual location 72 of the virtual user 71. A change in the orientation 53 of the user 51 produces a corresponding change in a virtual orientation 73 of the virtual user 71. A change in the location 54 of the user 51 can produce a corresponding change in a virtual location 72 of the virtual user 71.

In mediated reality, each sound object 80 can have a virtual position 77 in the sound space 20. A sound object 80 at a virtual position 77 has a virtual location and may also have a virtual orientation.

In mediated reality, each virtual visual object 90 can have a virtual position 77 in the virtual visual space 60. A virtual visual object at a virtual position 77 has a virtual location and a virtual orientation.

In 3DoF mediated reality, an orientation 53 of the user 51 controls a virtual orientation 73 of a virtual user 71. There is a correspondence between the orientation 53 and the virtual orientation 73 such that a change in the orientation 53 produces the same change in the virtual orientation 73. The virtual orientation 73 of the virtual user 71 in combination with a virtual field of view 74 defines a virtual visual scene 75 within the virtual visual space 60. In some examples, it may also define a virtual sound scene 76. A virtual visual scene 75 is that part of the virtual visual space 60 that is displayed to a user. A virtual sound scene 76 is that part of the virtual sound space 20 that is rendered to a user. The virtual sound space 20 and the virtual visual space 60 correspond in that a position within the virtual sound space 20 has an equivalent position within the virtual visual space 60. In 3D0F mediated reality, a change in the location 52 of the user 51 does not change the virtual location 72 or virtual orientation 73 of the virtual user 71.

In the example of 6DoF mediated reality, the situation is as described for 3DoF and in addition it is possible to change the rendered virtual sound scene 76 and the displayed virtual visual scene 75 by movement of a location 52 of the user 51. For example, there may be a mapping between the location 52 of the user 51 and the virtual location 72 of the virtual user 71. A change in the location 52 of the user 51 produces a corresponding change in the virtual location 72 of the virtual user 71. A change in the virtual location 72 of the virtual user 71 changes the rendered virtual sound scene 76 and also changes the rendered virtual visual scene 75.

This may be appreciated from Figs. 1B, 2B and 3B which illustrate the consequences of a change in location 52 and orientation 53 of the user 51 on respectively the rendered virtual sound scene 76 (Fig. 2B) and the rendered virtual visual scene 75 (Fig. 3B).

The virtual user is able to change position relative to sound objects 80 in the rendered virtual sound scene 76 and virtual visual objects 90 in the rendered virtual visual scene 75 (Fig. 3B).

The rendering of mediated reality is achieved by rendering virtual content, for example one or more virtual objects 80, 90 . A virtual object 80, 90 can be an artificial virtual object (e.g. a computer-generated virtual object). It may be a sound object 80 and/or a virtual visual object 90.

A sound object 80 is a sound source that may be located within the sound space 20. A rendered sound object 80 represents sounds rendered from a particular virtual location or position. A virtual visual object 90 is a visible virtual object within a virtual visual scene 75.

A sound object 80 can comprise audio encoded in any suitable format such as, for example, audio channels, specified audio objects, or higher order ambisonics (HOA).

When a sound object 80 is newly rendered, it is rendered at a particular location or position 77 (location with orientation). It would be desirable to control the initial rendering of a new sound object 80 to the user 51 (virtual user 71).

A social audio object 82 is an example of a sound object 80 that is associated with a different user and comprises at least speech of the different user. A live social audio object 82 is an example of a sound object 80 that is associated with a different user and comprises at least live (real-time) speech of the different user.

Live social audio objects 82 can be used to render social mediated reality where speech (and audio) from multiple users are rendered as sound objects in a shared virtual space. In at least some examples, the multiple users can, for example, control virtual positions of virtual users corresponding to the multiple users in the shared virtual space using first person-perspective mediated reality, for example, 3DoF, 3DoF+ or 6DoF first person-perspective mediated reality. This creates an immersive audio experience.

When a live social audio object 82, associated with a particular user, is newly rendered, it is rendered at a particular position (location or location with orientation). It would be desirable to control the initial rendering of a new live social audio object 82 to the user 51 (virtual user 71) in the shared virtual space. It would be desirable to control the initial rendering of the new live social audio object 82 to the user 51 (virtual user 71) in the shared virtual space, when the user 51 can roam within the virtual space using 6DoF first person-perspective mediated reality.

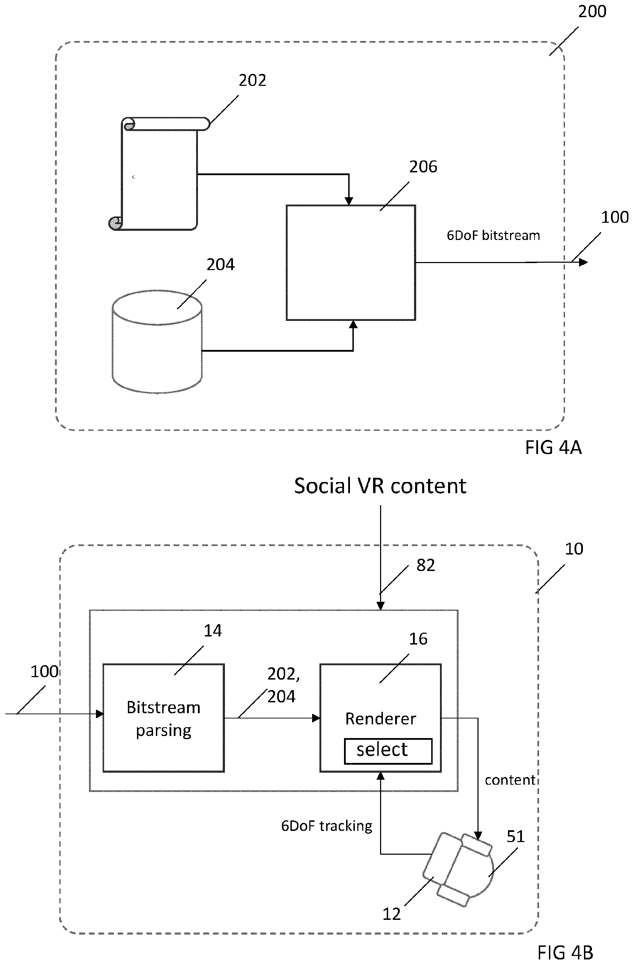

FIG 4A illustrates an example of a content-creation apparatus 200 and FIG 4B illustrates an example of a content-rendering apparatus 10. The content-creation apparatus 200 creates as an output a data structure 100 that is used as an input by the content-rendering apparatus 10. The content-rendering apparatus 10 renders spatial audio to a user 51.

The data structure 100 comprises spatial metadata 202 and specifies and/or comprises audio content 204. The spatial metadata 202 is metadata for controlling spatial audio (the position in three-dimensions of rendered audio sources). The spatial metadata 202 of the data structure 100 specifies one or more virtual positions 77 for initial rendering a new sound object 80 associated with a user different to the user 51. An encoder 206 encodes the data structure 100 in the form of a bitstream.

In some examples, an MPEG-I bitstream comprising metadata 204 and an MPEG-H bitstream comprising audio content 204 are combined into a single 6DoF bitstream.

The content-rendering apparatus 10 uses a decoder to decode the data structure 100 and spatial renderer 16 (e.g. a MPEG-I audio renderer) renders, to the user 51, spatial audio defined by the data structure 100 and a position of the user 51.

The content-creation apparatus 200 comprises means for creating a data structure 100 for controlling rendering of a virtual sound scene 76 to a user 51 of a remote apparatus 10. The data structure 100 specifies one or more virtual positions 77 (not illustrated) for initial rendering a new sound object 80 (not illustrated) associated with a different user (not the user 51).

FIG 4B illustrates an example of a content-rendering apparatus 10. The apparatus 10 comprises:
means 14 for receiving a data structure 100 for controlling rendering of a virtual sound scene 76 to a user 51 of the apparatus 10, wherein the data structure 100 specifies one or more virtual positions 77 (not illustrated) for initial rendering a new sound object 80 associated with a different user (not illustrated);
means 16 for selecting one of the one or more virtual positions 77 specified by the data structure 100, wherein the means for selecting one of the one or more virtual positions 77 specified by the data structure 100 is configured to select a specified virtual position 77 in dependence upon at least a real position 57 of the user 51; and
means 16 for rendering the new sound object 80 at the selected virtual position 77.

In at least some examples, the sound object 80 is a live social audio object 82 associated with the different user and comprises at least live speech of the different user. In some examples, the sound object 80 is received separately to the data structure 100.

In at least some examples, the means 16 for rendering enables the user 51 and the different user to share a virtual three-dimensional space (e.g. sound space 20), where the virtual sound scene 76 is a three-dimensional virtual sound scene 76 that has a fixed relationship to the virtual three-dimensional space (e.g. sound space 20).

In at least some examples, the means 16 for rendering enables the user 51 to change a virtual position 77 and/or virtual orientation 73 of a virtual user 71 within the virtual three-dimensional space (e.g. sound space 20). This enables first person perspective mediated reality for the user 51.

In at least some examples, the means 16 for rendering enables, after the initial rendering, at the selected virtual position 77, of the sound object 80 (associated with the different user), the different user to change a virtual position and/or virtual orientation of the rendered sound object 80 associated with the different user within the virtual three-dimensional space (e.g. sound space 20). This can enable first person perspective mediated reality for the different user.

In at least some examples, the apparatus 10 comprises means 12 for displaying configured to display a virtual visual object 90 at the selected virtual position 77 at which the new sound object 80 is rendered. The virtual visual object 90 and the new sound object 80 can be linked, for example, by an association between the virtual visual object 90 and the new sound object 80. For example, the data structure 100 can comprise spatial metadata 202 that is used to select the virtual visual object 90.

In at least some examples, the means 16 for rendering the new sound object 80 at the selected virtual position 77 is an MPEG-I audio renderer that creates a sound scene state based on which sound is to be rendered to the user 51 at a current real position 57 (location and/or orientation) of the user 51 (i.e. rendered to the corresponding virtual user 71 at the corresponding current virtual position 77 (virtual location and/or orientation) of the virtual user 71 in a virtual three-dimensional space (e.g. sound space 20). The virtual sound scene 76 is received encoded according to the MPEG-I standard and decoded to metadata (an encoder input form (EIF)) and audio content (MPEG_H).

In at least some examples, the apparatus 10 is a head-mounted apparatus 12 that comprises in/on/over ear loudspeakers for rendering audio and positioning circuitry for detecting changes in position (e.g. orientation or orientation and location) of the head-mounted apparatus 12 used for first person perspective mediated reality. In this example, but not necessarily all examples, the head-mounted apparatus 12 comprises display means for display of virtual visual objects to the user 51.

The means 16 for selecting one of the one or more virtual positions 77 specified by the data structure 100 is configured to select a specified virtual position 77 in dependence upon one or more of:
(i) a current (real-time) real orientation 53 of user 51;
(ii) a current (real-time) state of the virtual sound scene 76, which can vary with a current position of the user 51 when rendering first-person perspective mediated reality;
(iii) a current (real-time) estimated audibility to the user 51 (the virtual user 71) of a new sound object 80 at the one or more specified virtual positions 77;
(iv) a current (real-time) estimated visibility to the user 51 (the virtual user 71) of the one or more specified virtual positions 77;
(v) a current (real-time) direct line of hearing 122 (if any) between a virtual position 77 of a virtual user 71 (controlled by a real position 57 of the user 51) and the one or more specified virtual positions 77;
(vi) a current (real-time) direct line of visibility 120 between a virtual position 77 of a virtual user 71 (controlled by a real position 57 of the user 51) and the one or more specified virtual positions 77;
(vii) whether (or not) the current (real-time) virtual position 77 of a virtual user 71 (controlled by a real position 57 of the user 51) and the one or more specified virtual positions 77 share a defined acoustic space 130 (e.g. virtual rooms interconnected via audio paths) in a three-dimensional virtual sound scene 76;
(viii) whether (or not) the current (real-time) virtual position 77 of a virtual user 71 (controlled by a real position 57 of the user 51) and the one or more specified virtual positions 77 share a defined virtual physical space (e.g. a virtual room 132) in a virtual three-dimensional space (e.g. sound space 20);
(ix) whether (or not) one of the one or more specified virtual positions 77 is specified as a default position;
(x) a current (real-time) distance or weighted distance between a virtual position 77 of a virtual user 71 (controlled by a real position 57 of the user 51) and the one or more specified virtual positions 77;
(xi) sound attenuation attributes of a virtual three-dimensional space (e.g. sound space 20) between a current (real-time) virtual position 77 of a virtual user 71 (controlled by a real position 57 of the user 51) and the one or more specified virtual positions 77.

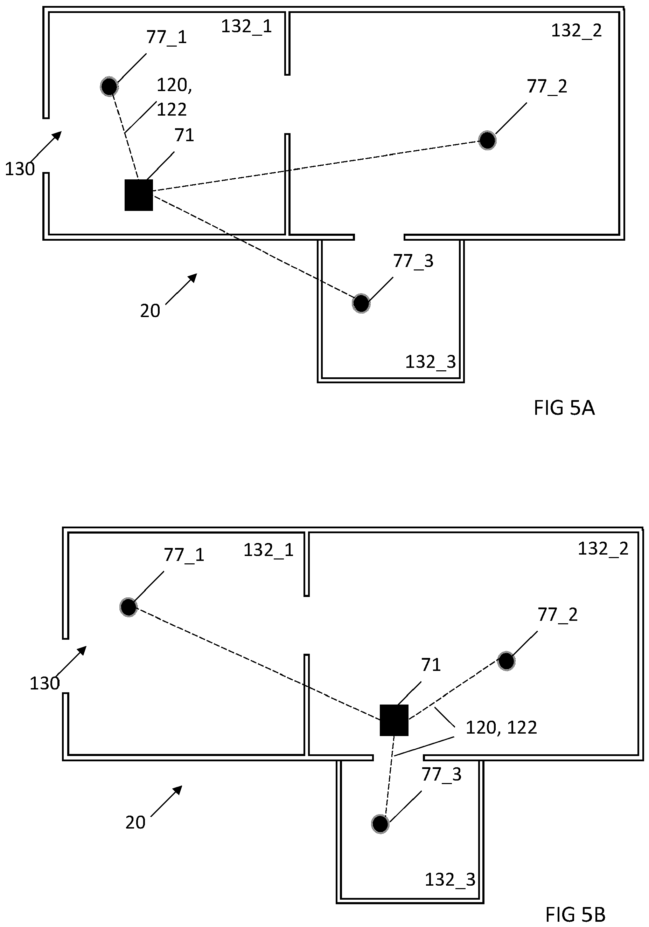

In FIGs 5A and 5B, the selection of one of the one or more virtual positions 77 specified by the data structure 100 depends upon a current (real-time) position (e.g. real location 52 or, real location 52 and real orientation 53) of user 51. The specified virtual positions 77 are the same in FIGs 5A and 5B and the sound space 20 is the same; the difference is a position (location) of the virtual user 71. This change in a position (location) of the virtual user 71 results in the selection of a different one of the multiple virtual positions 77 specified by the data structure 100 in the situation of FIG 5A compared to the situation of FIG 5B.

The sound space 20 comprises a single acoustic space comprised of three physical spaces (rooms) that are interconnected by open doorways. A first virtual position 77_1 specified by the data structure 100 is in a first room 132_1. A second virtual position 77_2 specified by the data structure 100 is in a second room 132_2. A third virtual position 77_3 specified by the data structure 100 is in a third room 132_3.

In FIG 5A, the virtual user 71 is in the first room 132_1. There is a direct line of hearing (and visibility) between the virtual user 71 and the first virtual position 77_1 but not between the virtual user 71 and the second virtual position 77_2 nor between the virtual user 71 and the third virtual position 77_3.

In FIG 5B, the virtual user 71 is in the second room 132_2 but close to the open doorway between the second room 132_2 and the third room 132_3. There is a direct line of hearing (and possibly visibility) between the virtual user 71 and the third virtual position 77_3 and between the virtual user 71 and the second virtual position 77_2 but not between the virtual user 71 and the first virtual position 77_1. The distance between the virtual user 71 and the third virtual position 77_3 is less than the distance between the virtual user 71 and the second virtual position 77_2.

A current (real-time) state of the virtual sound scene 76 varies with a current (real-time) position of the user 51 when rendering first-person perspective mediated reality. This affects an estimated audibility to the user 51 (the virtual user 71) of a newly rendered sound object 80 at the one or more specified virtual positions 77.

Audibility can, for example, be estimated by determining whether or not there is a direct line of hearing 122 between the virtual position 77 of the virtual user 71 (controlled by the real position 57 of the user 51) and the one or more specified virtual positions 77. A high audibility score is given to a specified virtual position 77 where there is a direct line of hearing 122 between the virtual position 77 of the virtual user 71 (controlled by the real position 57 of the user 51) and that specified virtual position 77.

Audibility can, for example, be estimated by determining whether or not the current (real-time) virtual position 77 of a virtual user 71 (controlled by a real position 57 of the user 51) and the one or more specified virtual positions 77 share a defined acoustic space 130 (e.g. virtual rooms interconnected via audio paths) in a three-dimensional virtual sound scene 76 or share a defined virtual physical space (e.g. a virtual room 132) in a virtual three-dimensional space (e.g. sound space 20). A high audibility score can be given to a specified virtual position 77 where it is located in a shared acoustic space or shared virtual physical space with the virtual user 71.

Audibility can, for example, be estimated by determining a current (real-time) distance or weighted distance between a virtual position 77 of a virtual user 71 (controlled by a real position 57 of the user 51) and the one or more specified virtual positions 77. A higher audibility score can be given to a specified virtual position 77 where it is located closer to the virtual user 71.

Audibility can, for example, be estimated by determining a current (real-time) sound attenuation between the virtual user and the one or more specified virtual positions 77. This could for example change because attenuating objects move between the virtual user and specified virtual position 77 because the virtual user moves. This could for example change because attenuating objects between the virtual user and specified virtual position 77 appear or change attenuation attributes.

The audibility score can, for example, be affected by a directivity of the sound object 80 at a specified virtual position 77 and/or a virtual orientation of the virtual user 71. The audibility score can, for example, be higher if the sound object 80 at a specified virtual position 77 is directed towards the virtual user 71 (and not away from the virtual user 71) and/or the virtual user 71 is orientated towards (and not away from) the specified virtual position 77.

In some but not necessarily all examples, the audibility score can be modified to take into account visibility to the sound object 80 i.e. visibility to the user 51 (the virtual user 71) of the one or more specified virtual positions 77. Visibility can, for example, be estimated by determining whether or not there is a direct line of visibility 120 between the virtual position 77 of the virtual user 71 (controlled by the real position 57 of the user 51) and the one or more specified virtual positions 77. A higher audibility score can be given to a specified virtual position 77 where there is a direct line of visibility 120 between the virtual position 77 of the virtual user 71 (controlled by the real position 57 of the user 51) and that specified virtual position 77.

The audibility score can, for example, be determined based on one or more parameters in the data structure.

The audibility score can, for example, be affected by many different estimates and factors. The selected specified virtual position 77 can, for example, be the specified virtual position 77 that has the highest current audibility score.

The selected specified virtual position 77 can, for example, be the specified virtual position that has the highest current audibility score above a threshold value. The threshold can, for example, be determined based on one or more parameters in the data structure.

In at least some examples, if the current audibility score does not exceed the threshold value then the selected specified virtual position 77 is a default virtual position. The default virtual position can, for example, be one of the specified virtual positions 77. The data structure can, for example, specify, for example using a parameter, which of the specified virtual positions 77 is specified as a default position.

In some examples, the selection of the specified virtual position can additionally take into account a desired or preferred position indicated by the different user. Thus, the position of both users can be taken into account when selecting a specified virtual position 77.

It will be appreciated from the foregoing that, in some examples, the selection of a virtual position 77 specified by the data structure 100 is dependent upon at least one parameter specified in the data structure 100.

In some examples, the selection of a virtual position 77 specified by the data structure 100 comprises selecting a sub-set of virtual positions 77 from the virtual positions 77 specified by the data structure 100. The sub-set is selected in dependence upon at least one parameter specified in the data structure 100. The selected virtual position 77 is then selected from the sub-set of virtual positions 77 in dependence upon a distance or weighted distance between a virtual position 77 of a virtual user 71 (controlled by a real position 57 of the user 51) and the one or more specified virtual positions 77 in the sub-set.

In FIG 5A, only one of the virtual positions 77 specified by the data structure 100 (the first virtual position 77_1) is in a direct line of hearing 122 (or direct line of visibility 120) with the virtual user 71 and that virtual position 77_1 is selected.

In FIG 5B, a sub-set of the virtual positions 77 specified by the data structure 100 (the second virtual position 77_2 and the third virtual position 77_3) are in a direct line of hearing 122 (or direct line of visibility 120) with the virtual user 71.

In one implementation, the virtual position 77_3 of the sub-set that has the shortest distance to the virtual user 71 is selected as the selected virtual position 77.

In another implementation, the virtual position 77_2 of the sub-set that is in the same room 132_2 as the virtual user 71 is selected as the selected virtual position 77.

In other implementations, the virtual position 77_2 of the sub-set is selected as the selected virtual position 77 if the virtual user 71 is oriented towards it and the virtual position 77_3 of the sub-set is selected as the selected virtual position 77 if the virtual user 71 is oriented towards it.

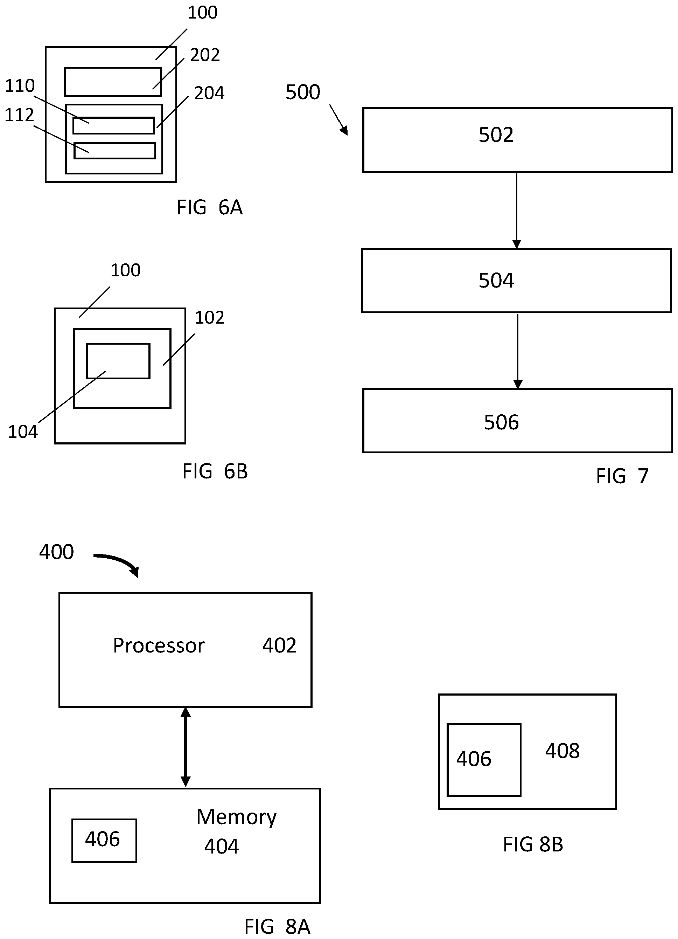

FIG 6A illustrates an example of the data structure 100. The data structure comprises audio content 204 and spatial metadata 202. The spatial metadata is metadata for controlling spatial audio (the location in three-dimensions of rendered audio sources).

The spatial metadata 202 specifies in element 110 one or more virtual positions 77 (the virtual positions 77 specified by the data structure 100).

The spatial metadata 202 optionally comprises one or more parameters 112 for controlling the selection of a virtual position 77 from virtual positions 77 specified 110 by the data structure 100.

Selecting a virtual position 77 specified 110 by the data structure 100 can, for example, be dependent upon at least one parameter 112 specified in the data structure 100.

Selecting a virtual position 77 specified 110 by the data structure 100 can, for example, be dependent upon a scoring system controlled by at least one parameter 112 specified in the data structure 100.

Selecting a virtual position 77 specified 110 by the data structure 100 can, for example, be dependent upon a selection process controlled by at least one parameter 112 specified in the data structure 100. For example, the selection process can comprise selecting a sub-set of virtual positions 77 from the virtual positions 77 specified 110 by the data structure 100 in dependence upon the at least one parameter 112 specified 110 in the data structure 100 and then selecting the selected virtual position 77 from the sub-set of virtual positions 77 in dependence upon a distance or weighted distance between a virtual position 77 of a virtual user 71 (controlled by a real position 57 of the user 51) and the one or more specified 110 virtual positions 77 in the sub-set. The at least one parameter 112 specified in the data structure 100 can, for example, specify the weighting used. For example, the weighted distance can be the average distance between all existing virtual users and the respective specified virtual position 77.

As illustrated in FIG 6B, the data structure 100 can additionally be a hierarchical data structure comprising different elements 102, 104. The data structure 100 is for controlling initial spatial rendering of a sound object 80 to a user 51.

The data structure 100 comprises a first element 102 configured to specify a sound object 80 and a second element 104 configured to specify multiple alternative virtual positions 77 for initial rendering the sound object 80 and at least one parameter 112 for controlling selection of a virtual position 77 for initial rendering the sound object 80 from the specified 110 multiple alternative virtual positions 77 for initial rendering the sound object 80.

In some examples, the first element 102 is a sub-element of the second element 104. In some examples (as illustrated), the second element 104 is a sub-element of the first element 102.

In some examples, the sound object 80 is a live social audio object 82 associated with a different user to the user 51.

The data structure 100 can be determined by a content creator or curator.

In some examples, the data structure 100 can be a hierarchical sound scene description and the elements 102, 104 are Extensible Markup Language (XML) elements. In some examples, the data structure 100 comprises an encoder input form (EIF) according to the MPEG-I standard.

In some examples, the data structure 100 is a MPEG-I Audio bitstream comprising metadata (202, ElF) and the audio data 204. It contains the metadata 202 required to render a 6DoF sound scene. The MPEG-H bitstream contains the audio data 204.

An encoder input form (EIF) can specify audio sources (objects, channels, HOA), metadata for signals (position, orientation, directivity), room information (walls, acoustic reflectivity etc.), animation (moving objects), audio source localization/ radiation patterns/ extent or width/occlusion; reverberation of environment and transition through "scene gateways" such as doorways

MPEG-H 3D Audio, specified as ISO/IEC 23008-3 (MPEG-H Part 3), is an audio coding standard developed by the ISO/IEC Moving Picture Experts Group (MPEG) to support coding audio as audio channels, sound objects, or higher order ambisonics (HOA). MPEG-H 3D Audio can support up to 64 loudspeaker channels and 128 codec core channels. The sound object 80 can be encoded using MPEG-H 3D Audio.

FIG 7 illustrates an example of a method 500 for controlling a position at which a sound object that is new to a three-dimensional sound space is initially rendered in the three-dimensional sound space.

At block 502, the method 500 comprises receiving a data structure for controlling rendering of a sound scene to a user of the apparatus, wherein the data structure specifies one or more positions for initial rendering a new sound object associated with a different user;

At block 504, the method 500 comprises selecting one of the one or more positions specified by the data structure, wherein the means for selecting one of the one or more positions specified by the data structure is configured to select a specified position in dependence upon at least a position of the user;

At block 506, the method 500 comprises rendering the new sound object at the selected position.

Fig 8A illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in Fig 8A the controller 400 may be implemented using instructions that enable hardware functionality, for example, by using executable instructions of a computer program 406 in a general-purpose or special-purpose processor 402 that may be stored on a computer readable storage medium (disk, memory etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 10 comprises:
at least one processor 402; and
at least one memory 404 including computer program code
the at least one memory 404 and the computer program code configured to, with the at least one processor 402, cause the apparatus 10 at least to perform:
   receiving a data structure for controlling rendering of a sound scene to a user of the apparatus, wherein the data structure specifies one or more positions for initial rendering a new sound object associated with a different user;
   selecting one of the one or more positions specified by the data structure, wherein the means for selecting one of the one or more positions specified by the data structure is configured to select a specified position in dependence upon at least a position of the user; and
   rendering the new sound object at the selected position.

The apparatus 10 comprises:
at least one processor 402; and
at least one memory 404 including computer program code,
the at least one memory storing instructions that, when executed by the at least one processor 402, cause the apparatus at least to:
   use a data structure to control rendering of a sound scene to a user of the apparatus, wherein the data structure specifies one or more positions for initial rendering a new sound object associated with a different user;
   select one of the one or more positions specified by the data structure in dependence upon at least a position of the user; and
   render the new sound object at the selected position.

As illustrated in Fig 8B, the computer program 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

Computer program instructions for causing an apparatus to perform at least the following or for performing at least the following:
use a data structure to control rendering of a sound scene to a user of the apparatus, wherein the data structure specifies one or more positions for initial rendering a new sound object associated with a different user;
select one of the one or more positions specified by the data structure in dependence upon at least a position of the user; and
render the new sound object at the selected position.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

The following relates to virtual reality (VR), 6DoF audio rendering and social VR. The following additionally relates to MPEG-I Audio standardization, where one of the requirements of the standard is to provide support for social VR:
*Requirement 24. "The specification shall support rendering of speech and audio from other users in the virtual environment. The speech and audio may be immersive. "*

When a user is consuming VR content and answers an inbound social VR call (examples include: someone else joining the VR experience or a call from a friend that is placed in the virtual sound scene 76), the position 77 of the call is important. If not handled properly, the initial call placement may be:
too far away from the virtual user 71, and the user 71 will not hear it (perhaps the user 71 is in a completely different room);
not in a position that is determined suitable by the content creator (behind some object or otherwise in an awkward position);
in a region that is not visible to the user 51(virtual user 71), causing the user 51 to seek out the placement of the call.

This becomes more complicated due to the 6DoF nature of the virtual sound scene 76. The virtual sound scene 76 may be quite big and not always suitable for easy preview and finding the placed social VR call.

Currently the positioning of social VR elements is not taken into account in MPEG-I Audio.

The following describes a method for placing communication audio content in a virtual sound scene 76 with six degrees of freedom (6DoF) for facilitating social consumption of the virtual sound scene 76 based on content creator preferences and a state of the virtual sound scene 76. The immersive social consumption may be for a fully virtual (VR), augmented scene (AR) or a mixed reality virtual scene.

When creating the content, the content creator can add social communication audio entry points (the one or more virtual positions 77 specified by the data structure 100) for social VR consumption into the scene at different positions. Whenever a social VR content is added to the scene, the renderer determines (selects) a position 77 for it based on the added social VR (or communication audio) entry points (the one or more virtual positions 77 specified by the data structure 100), their parameters and the scene state.

In brief, the renderer obtains the list of social VR entry points (the one or more virtual positions 77 specified by the data structure 100) and determines which of these are eligible for selection (for example, the ones that are visible from the position 77 of the virtual user 71, ones that are in the same acoustic environment/room as the virtual user 71) and then from the set of eligible social VR entry points (the one or more virtual positions 77 specified by the data structure 100), the system or renderer picks the closest one (the selected virtual position 77)

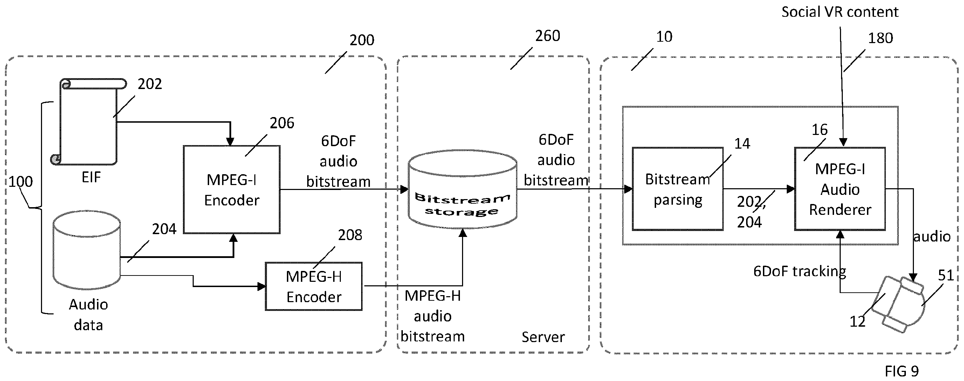

FIG 9 illustrates an example of a content-rendering apparatus 10 comprising:
means 14 for receiving a data structure 100 for controlling rendering of a virtual sound scene 76 to a user 51 of the apparatus 10, wherein the data structure 100 specifies one or more virtual positions 77 (not illustrated) for initial rendering a new sound object 80 associated with a different user (not illustrated);
means 16 for selecting one of the one or more virtual positions 77 specified by the data structure 100, wherein the means for selecting one of the one or more virtual positions 77 specified by the data structure 100 is configured to select a specified virtual position 77 in dependence upon at least a real position 57 of the user 51; and
means 16, 12 for rendering the new sound object 80 at the selected virtual position 77.

Figure 9 shows an example MPEG-I implementation pipeline. The content-creation apparatus 200 creates the content and as an output provides an encoder input form (EIF) file 202 with the description of the 6DoF virtual sound scene 76 and the audio content 204 to go along with the virtual sound scene 76. These are then encoded into a data structure 100 (an MPEG-I Audio bitstream by the MPEG-I Audio encoder 206). In addition, the audio content 204 is encoded via MPEG-H encoder 208 to generate MPEG-H encoded bitstreams. The bitstreams are stored on a server 260.

When rendering a scene, the bitstream is obtained by the apparatus 10 which passes it on the MPEG-I decoder 14, which decodes the data structure 100 provided by the bitstream and provides the MPEG-I audio renderer 16 with the audio content 204 and metadata 202 needed for rendering the virtual sound scene 76. The MPEG-I audio renderer 16 obtains the data 204, 202 and the user's position 57 and creates a sound scene state based on which audio is rendered to the user 51.

The encoder input form (EIF) file 202, the MPEG-I Audio encoder 206 and the MPEG-H encoder 208 are modified. The MPEG-I decoder 14 and the MPEG-I audio renderer 16 are modified.

The encoder input form (EIF) file 202 is modified to introduce a new element, <SocialVREntryPoint> to the ElF specification.

| **<SocialVREntryPoint>** | | | | |
|---|---|---|---|---|
| Declares a SocialVREntryPoint which is a position in the scene into which an incoming social VR audio source may be (initially) positioned in. More than one SocialVREntryPoint may be determined in which case the position for an incoming social VR audio source is determined at run time according to listener position and the attributes of the (eligible) SocialVREntryPoints. | | | | |
| **Attribute** | **Type** | **Flags** | **Default** | **Description** |
| Id | ID | R | | Identifier |
| position | Position | R, M | | Position |
| orientation | Rotation | O, M | (0° 0° 0°) | Orientation |
| cspace | Coordinate space | O | relative | Spatial frame of reference |
| losRequired | Boolean | O | true | If true, this SocialVREntryPoint is eligible if the listener has line-of-sight to the Position of this SocialVREntryPoint |
| sameAcousticEnv | Boolean | O | true | If true, this SocialVREntryPoint is eligible if the listener is |
| | | | | positioned in the same AcousticEnvironment as the Position of this SocialVREntryPoint |
| defaultEntryPoint | Boolean | R* | true | The SocialVREntryPoint to use if no other SocialVREntryPoint is found to be eligible. |
| | | | | *It is required that one and only one SocialVREntryPoint has defaultEntryPoint set as True. |

When a social VR content 180 arrives to the renderer apparatus 10, the <SocialVREntryPoint> elements are used to position it.

The position, orientation and cspace attributes define the positioning of the <SocialVREntryPoint> element.

The losRequired attribute indicates whether or not a line-of-sight from the user to the <SocialVREntryPoint> position is required for the social VR entry point to be eligible for placement of social VR content.

The sameAcousticEnv attribute indicates whether or not the user needs to be in the same acoustic environment as the <SocialVREntryPoint> position 77 for the social VR entry point to be eligible for placement of social VR content.

The default parameter indicates which social VR entry point is used as the `default' option, if no eligible social VR entry points are determined.

Similar to the <Transform> and <Anchor> elements, the <SocialVREntryPoint> element may have child elements which will inherit their position from the position of the <SocialVREntryPoint> and become active when the parent <SocialVREntryPoint> is chosen.

### EXAMPLE:

```
 <SocialVREntryPoint id="SVREP:1 position="0.3 0.2 -1.2" default="true">
 <ObjectSource id="OS:1" position="2.0 1.01 2.2" signal="AS:SVR"
 aparams="noreverb"/>
 </SocialVREntryPoint>
 <SocialVREntryPoint id="SVREP:2 position="-1.2 10.0 1.2">
 <ObjectSource id="OS:2" position="0.0 0.0 0.0" signal="AS:SVR"/>
 </SocialVREntryPoint>
```

In the example, the position of the ObjectSource (object) is given relative to the position of the SocialVREntryPoint. The object position is like an offset. The SocialVREntryPoint position is used to select which SocialVREntryPoint is used. The final position of the audio object will then be the object position. In this case "2.3 1.21 1.0". In some cases ObjectSource position (the offset) will be "0.0 0.0 0.0" as in the second example.

There may be multiple <ObjectSource> elements inside the SocialVREntryPoint with slightly differing positions (offsets). One use case is to have one of the objects be the actual social VR source (audio of different user) and another object be some sort of background audio (music) that is to be played whenever this socialVREntryPoint is selected.

In the above example there are two social VR entry points defined. Both of them have an <ObjectSource> element defined as a child element. For both <ObjectSources> the same signal ("AS:SVR") is set as the input signal. In this example, this signal is the social VR content, that is, if social VR content arrives at the player, it passes it on to the MPEG-I renderer with this id.

When one of the social VR entry points is selected, the <ObjectSource> elements inside the corresponding <SocialVREntryPoint> element are made active. Otherwise they are not active (muted).

In an alternative embodiment of the implementation, the <SocialVREntryPoint> is a sub-structure of one or more audio elements in the audio scene (see modified <ObjectSource> element description below).

| **<ObjectSource>** | | | | |
|---|---|---|---|---|
| Declares an ObjectSource which emits sound into the virtual scene. The ObjectSource has a position/orientation in space. The radiation pattern can be controlled by a directivity. If no directivity attribute is present, the source radiates omnidirectional. Optionally it can have a spatial extent, which is specified through a geometric object. If no extent is specified, the source is a point source. The signal component of the ObjectSource must contain at least one waveform. When the signal has multiple waveforms, the spatial layout of these waveforms must be specified in an <lnputLayout> subnode. | | | | |
| **Child node** | **Count** | **Description** | | |
| <InputLayout> | 0..1 | Signal positioning (required when signal has multiple waveforms) | | |

| **Child node** | **Count** | **Description** | | |
|---|---|---|---|---|
| <SocialVREntry Point> | 0..1 | Social VR entry point parameters for audio object initial placement | | |

| **Attribute** | **Type** | **Flags** | **Default** | **Description** |
|---|---|---|---|---|
| Id | ID | R | | Identifier |
| position | Position | O, M | | Position, optional if <SocialVREntryPoint> is defined |
| orientation | Rotation | O, M | (0° 0° 0°) | Orientation |
| cspace | Coordinate space | O | relative | Spatial frame of reference |
| active | Boolean | O, M | true | If true, then render this source |
| gainDb | Gain | O, M | 0 | Gain (dB) |
| refDistance | Float > 0 | O | 1 | Reference distance (m) (see comment below) |
| signal | AudioStream ID | O, M | | Audio stream, optional if <SocialVREntryPoint> is defined |
| extent | Geometry ID | O, M | none | Spatial extent |
| directivity | Directivity ID | O, M | none | Sound radiation pattern |
| directiveness | Value | O, M | 1 | Directiveness (see 3.4.1) |
| aparams | Authoring parameters | O | none | Authoring parameters (see 4.12) |
| mode | Playback mode | O | continuou s | Playback mode {"continuous", "event"} |
| play | Boolean | O, M | False | Playback enabled? |

The incoming social VR call is placed into the virtual sound scene 76 based on the <SocialVREntryPoint> element and the incoming social VR call is rendered based on the parameters of the <ObjectSource> element. In addition to <ObjectSource>, <ChannelSource> and <HOASource> elements may be used for the incoming call audio rendering.

The MPEG-I audio encoder 206 encodes the encoder input form (EIF) file 202 into a bitstream. The following bitstream syntax can be used for the <SocialVREntryPoint> element:

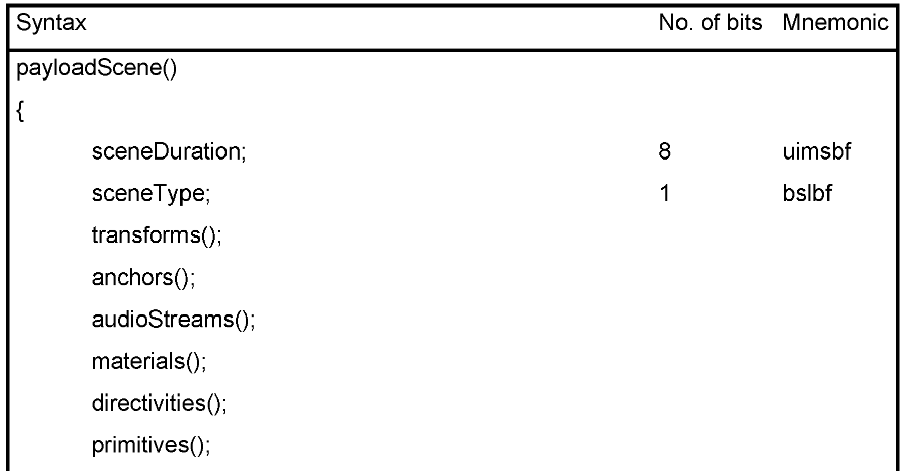

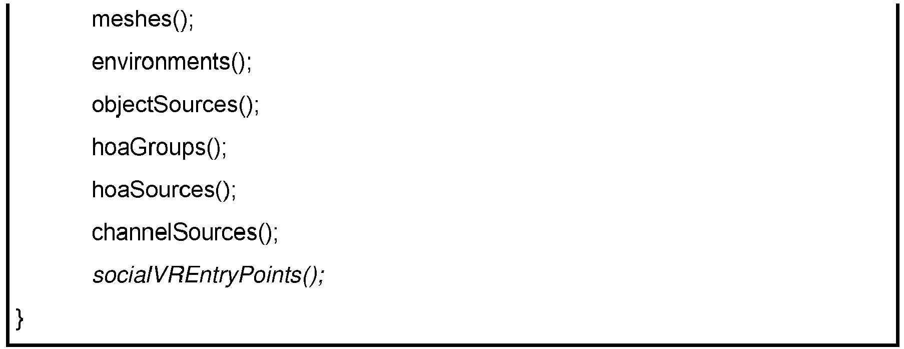

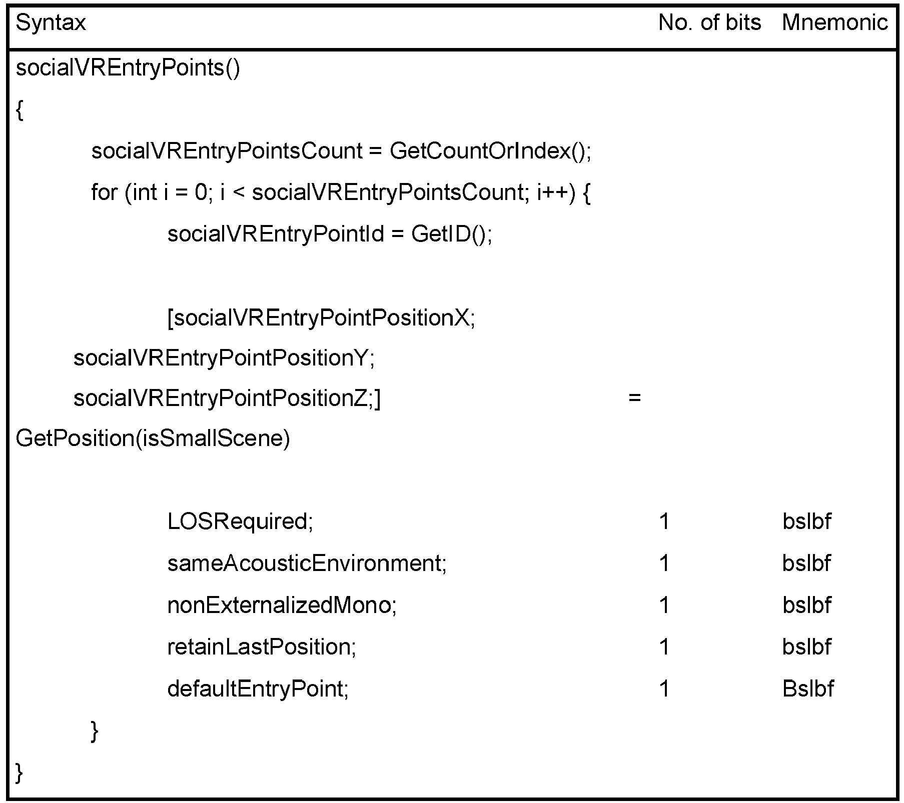

LOSRequired: Line-of-sight from listener to this position is required for this SocialVREntryPoint to be eligible.
sameAcousticEnvironment: The listener needs to be in the same AcousticEnvironment as this SocialVREntryPoint for this SocialVREntryPoint to be eligible.
nonExternalizedMono: The SocialVREntryPoint for this is non externalized mono rendering of the communication audio.
retainLastPosition: In case the communication audio call is dropped due to any unforeseen reason (e.g., loss of connectivity) or exits the call. In such a scenario, the user shall have the initial placement of the social VR call in the same location as before if this flag is equal to 1. This has the benefit of having the call placement such that it is in a well-known position to the Listener.
defaultEntryPoint: This SocialVREntryPoint is used when no other SocialVREntryPoints are found to be eligible.

The MPEG-i decoder 14 reads the bitstream and initializes the scene state based on it. The social VR entry point definitions are extracted from the bitstream and stored in memory, for example, in a structure like this (one for each social VR entry point):

```
 struct SocialVREntryPoint {
   position position;
   bool losRequired;
   bool sameAcousticEnvironment;
   bool defaultEntryPoint; }
```

When a social VR arrives at the player apparatus 10, the player forwards the audio content 204 to the MPEG-I audio renderer 16. The MPEG-I audio renderer 16 then determines based on the listener position (position 57 of the user 51), scene state and social VR entry point definitions the position where the social VR content audio is placed.

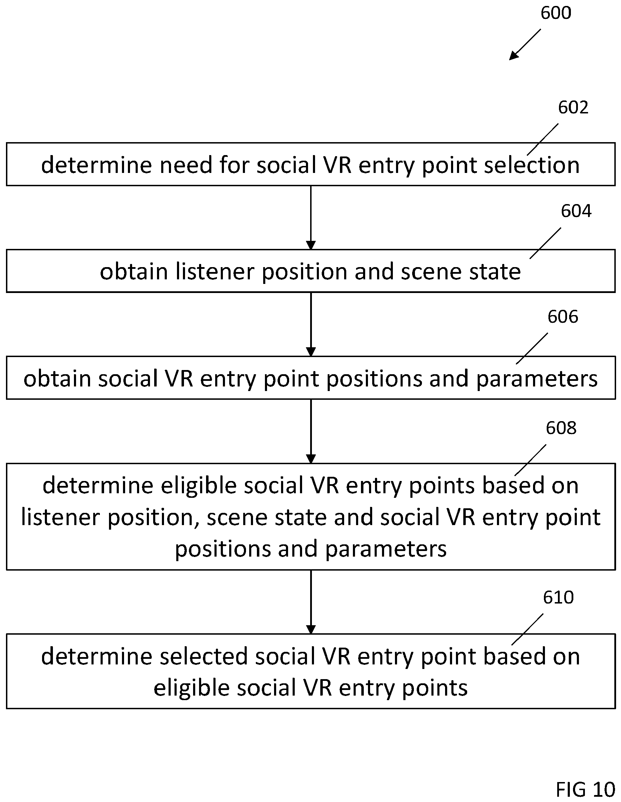

Figure 10 shows an example of a suitable selection method 600.

At block 602, the method 600 comprises determining a need for social VR entry point selection.

At block 604, the method 600 comprises obtaining a position 57 of the user 51 and a state of the virtual sound scene 76.

At block 606, the method 600 comprises obtaining social VR entry point positions 77 and parameters.

At block 608, the method 600 comprises determining eligible social VR entry point positions 77 based on a position 57 of the user, a virtual position 77 of the virtual user 71 (listener position), a state of the sound scene and social VR entry point positions 77 and parameters.

At block 610, the method 600 comprises determining a selected social VR entry point position 77 based on eligible social VR entry points.

Determining which social VR entry points are eligible social VR entry points may be done using something similar to the pseudo code below:

| |
|---|
| vector<int> determine_eligible_svrep_idxs(vector<SocialVREntryPoint> |
| socialVREntryPoints, |
| Position listenerPosition) { |
| vector<int> eligibleSociaIVREntryPointsIndexes; |
| for (int i = 0; i < socialVREntryPoints.size(); ++i) { |
| if (socialVREntryPoints[i].LOSRequired && |
| socialVREntryPoints[i].sameAcousticEnv) { |
| if los_check(listenerPosition, sociaIVREntryPoints[i]. Position) && |
| SameAcEnvCheck(listenerPosition, soci alVR EntryPoi nts[i]. Positi on){ |
| eligibleSocialVREntryPoints.push_back(i); |
| } |
| } else if (socialVREntryPoints[i].LOSRequired) { |
| if los_check(listenerPosition, socialVREntryPoints[i].Position) { |
| eligibleSocialVREntryPoints.push_back(i); |
| } |
| } else if (sociaIVREntryPoints[i].sameAcousticEnv) { |
| if same_ac_env_check(listenerPosition, socialVREntryPoints[i].Position) { |
| eligibleSocialVREntryPoints.push_back(i); |
| } |
| } |
| } |
| return eligibleSocialVREntryPoints; |
| } |

From the list of eligible social VR entry points, the closet one is chosen:

| |
|---|
| int get_social_vr_entry_point_index(position listenerPosition, |
| vector<SocialVREntryPoint> socialVREntryPoints) { |
| int selectedSocialVREntryPointIndex; |
| eligibleSocialVREntryPointIndices = |
| determine_eligible_social_vr_entry_point_indices(socialVREntryPoints, listenerPosition) ; |
| if eligibleSocialVREntryPointIndices.size() == 0 { |
| for (int i = 0; i < socialVREntryPoints.size(); ++i) { |
| if (socialVREntryPoints[i].default) { |
| return i; |
| } |
| } |
| } |
| float minimumDistance = INFINITY; |
| for (int i = 0; i < eligibleSocialVREntryPointIndices.size(); ++i) { |
| distance = distance_between( |
| socialVREntryPoints[eligibleSocialVREntryPointIndices[i]].position, listenerPosition); |
| if distance < minimumDistance |
| selectedSocialVREntryPoint = eligibleSocialVREntryPointIndices[i]; |
| minimum Distance = distance; |
| } |
| } |
| return selectedSocialVREntryPointIndex; |
| } |

In the above, los_check() performs a check of whether or not there is a line-of-sight from the listener to the sociaIVREntryPoint. This may be done, for example, using ray-tracing. The same_ac_env_check() performs a check that the listener is in the same acoustic environment as social VR entry point. The distance_between(position1, position2) returns the Euclidian distance between two positions.

### Examples:

FIG 5A shows an example of a scene where the content creator has added three social VR entry point positions 77.

In one implementation, when a social VR content arrives, the distance between the user 71 and the social VR entry point positions 77 is calculated and the closest to the user 71 is chosen.

| |
|---|
| <AudioScene> |
| ... |
| <SocialVREntryPoint id="SVREP:1" position="2.5 1.3 -4.3"/> |
| <SocialVREntryPoint id="SVREP:2" position="0.8 -3.3 2.3"/> |
| <SocialVREntryPoint id="SVREP:3" position="1.3 6.3 -2.3"/> |
| ... |
| </AudioScene> |

In another implementation, the content creator has added the losRequried parameter to the <SocialVREntryPoint> elements.

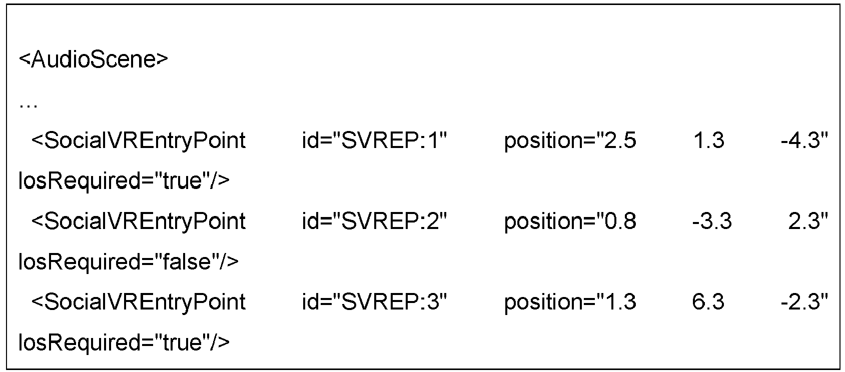

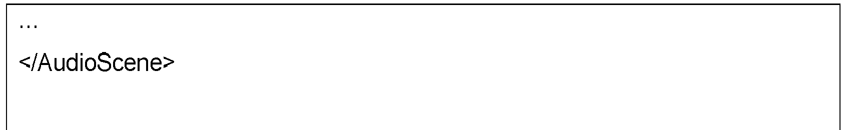

When determining eligible social VR entry points, social VR entry point 3 is not considered eligible as it has losRequired set to true and there is no line-of-sight from the listener to the social VR Entry point. Entry point 2 would be eligible even though there is no line-of-sight since the losRequired parameter is set to false. Entry point 1 is still chosen as it is the closest one.

FIG 5B shows a scene with several acoustic environments defined. The social VR entry points have the sameAcousticEnv parameter set to true.

| |
|---|
| <AudioScene> |
| ... |
| <SocialVREntryPoint id="SVREP:1" position="2.5 1.3 -4.3" SameAcousticEnv="true"/> |
| <SocialVREntryPoint id="SVREP:2" position="0.8 -3.3 2.3" SameAcousticEnv ="true"/> |
| <SocialVREntryPoint id="SVREP:3" position="1.3 6.3 -2.3" SameAcousticEnv ="true"/> |
| <AcousticEnvironment id="AcEnv:1" region="Mesh:AcEnv1"> |
| ... |
| </AcousticEnvironment> |
| <AcousticEnvironment id="AcEnv:2" region="Mesh:AcEnv2"> |
| ... |
| </AcousticEnvironment> |
| <AcousticEnvironment id="AcEnv:3" region="Mesh:AcEnv3"> |
| ... |
| </AcousticEnvironment> |
| ... |
| </AudioScene> |

In the example shown social VR entry points 1 and 3 are deemed to be not eligible since they are not in the same acoustic environment as the listener. Thus, even though it is not the closest social VR entry point to the listener. Social VR entry point 2 is selected.

### Additional embodiments:

In some scenarios it is possible for there to be more than one listener in a scene when a social VR content appears. In such a case, the system may take into account the position of both listeners when determining the eligibility and selection of the social VR entry point. The system may interpret the sameAcousticEnv and losRequired requirements shall be met by both listeners. For distance calculation, the average of the distance from the two listeners to the social VR entry points may be used.

In yet another scenario, the only users may be the social VR calling user. Consequently, the calling in user uses his/her own position in the virtual scene as the listener position to determine the initial placement of the second social VR calling in user.

In some cases, the social VR entry point is user tracked, or in other words, the calling in user is also able to traverse the 6DoF virtual scene with six degrees of freedom.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or `one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
means for receiving a data structure for controlling rendering of a sound scene to a user of the apparatus, wherein the data structure specifies one or more positions for initial rendering of a new sound object associated with a different user;
means for selecting one of the one or more positions specified by the data structure, wherein the means for selecting one of the one or more positions specified by the data structure is configured to select a specified position in dependence upon at least a position of the user; and
means for rendering the new sound object at the selected position.

2. An apparatus as claimed in claim 1, wherein the means for rendering enables the user and the different user to share a virtual three-dimensional space, wherein the sound scene is a three-dimensional sound scene that has a fixed relationship to the virtual three-dimensional space.

3. An apparatus as claimed in claim 2, wherein the means for rendering enables the user to change position and/or orientation of the user within the virtual three-dimensional space.

4. An apparatus as claimed in claim 2 or 3, wherein the means for rendering enables, after the initial rendering of the sound object associated with the different user at the selected position, the different user to change a position and/or orientation at which the sound object associated with the different user is rendered within the virtual three-dimensional space.

5. An apparatus as claimed in any preceding claim, comprising means for displaying a visual object at the selected position at which the new sound object is rendered.

6. An apparatus as claimed in any preceding claim, wherein the sound object is a live social audio object associated with the different user and comprises at least live speech of the different user.

7. An apparatus as claimed in any preceding claim, wherein the means for selecting one of the one or more positions specified by the data structure is further configured to select a specified position in dependence upon one or more of:
an orientation of the user;
a state of the sound scene;
estimated audibility to the user of the new sound object at the one or more specified positions;
estimated visibility to the user of the one or more specified positions;
a direct line of hearing between a position of the user and the one or more specified positions;
a direct line of visibility between a position of the user and the one or more specified positions;
whether the position of the user and any of the one or more specified positions share a defined acoustic space in a three-dimensional sound scene;
whether the position of the user and any of the one or more specified positions share a defined physical space in a virtual three-dimensional space;
whether one of the one or more specified positions is specified as a default position; a distance or weighted distance between a position of the user and the one or more specified positions;
sound attenuation attributes of a virtual three-dimensional space between a position of the user and the one or more specified positions.

8. An apparatus as claimed in any preceding claim, wherein the means for selecting one of the one or more positions specified by the data structure is configured to select a specified position in dependence upon at least one parameter specified in the data structure.

9. An apparatus as claimed in claim 8, wherein the means for selecting one of the one or more positions specified by the data structure is configured to select a sub-set of positions from the one or more positions specified by the data structure in dependence upon the at least one parameter specified in the data structure and configured to select the selected position from the sub-set of positions in dependence upon a distance or weighted distance between a position of the user and the one or more specified positions in the sub-set.

10. An apparatus as claimed in any preceding claim, wherein the means for rendering the new sound object at the selected position is an M PEG-I audio renderer that creates a sound scene state based on which sound is to be rendered to the user at a current position and/or orientation of the user in a virtual three-dimensional space.

11. An apparatus as claimed in any preceding claim, wherein the data structure is a data structure for controlling spatial rendering of a sound object to a user and the data structure comprises:
a first element configured to specify a sound object;
a second element configured to specify multiple alternative positions for initial rendering the sound object and at least one parameter for controlling selection of a position for initial rendering the sound object from the specified multiple alternative positions for initial rendering the sound object.

12. An apparatus as claimed in claim 11, wherein the first element is a sub-element of the second element or the second element is a sub-element of the first element.

13. An apparatus as claimed in any preceding claim, configured as a head-mounted apparatus.

14. A method comprising:
receiving a data structure for controlling rendering of a sound scene to a user of the apparatus, wherein the data structure specifies one or more positions for initial rendering a new sound object associated with a different user;
selecting one of the one or more positions specified by the data structure, wherein the means for selecting one of the one or more positions specified by the data structure is configured to select a specified position in dependence upon at least a position of the user; and
rendering the new sound object at the selected position.

15. A computer program that when executed by one or more processors of an apparatus causes the apparatus to:
use a data structure to control rendering of a sound scene to a user of the apparatus, wherein the data structure specifies one or more positions for initial rendering a new sound object associated with a different user;
select one of the one or more positions specified by the data structure in dependence upon at least a position of the user; and
render the new sound object at the selected position.
